Europäisches Patentamt

(19) European Patent Office        (11) Publication number: **0 212 140**

Office européen des brevets                                **B1**

(12)                    **EUROPEAN PATENT SPECIFICATION**

(45) Date of publication of patent specification: **02.05.90**        (51) Int. Cl.⁵: **B 29 C 43/12,** B 29 D 22/00 //
                                                                    (B29K105/12, B29L22:00,
(21) Application number: **86108600.7**                               23:00)

(22) Date of filing: **24.06.86**

(54) Method of making a hollow fiber reinforced structure.

(30) Priority: **22.08.85 US 768259**

(43) Date of publication of application:
**04.03.87 Bulletin 87/10**

(45) Publication of the grant of the patent:
**02.05.90 Bulletin 90/18**

(84) Designated Contracting States:
**DE FR GB NL SE**

(56) References cited:
**US-A-3 832 109**
**US-A-3 937 781**
**US-A-4 314 964**
**US-A-4 338 070**

(73) Proprietor: **THE BUDD COMPANY**
**3155 W. Big Beaver Road**
**Troy, MI 48084 (US)**

(72) Inventor: **Freeman, Richard benjamin**
**405 Riblett Lane**
**Wilmington Delaware 19809 (US)**

(74) Representative: **Finck, Dieter et al**
**Patentanwälte v. Füner, Ebbinghaus, Finck**
**Mariahilfplatz 2 & 3**
**D-8000 München 90 (DE)**

Courier Press, Leamington Spa, England.

## Description

The invention relates to a method of forming a hollow fiber reinforced structure comprising the steps of providing an outer mold, placing fibrous material along the inner walls of said outer mold, placing an inner inflatable bladder between said fibrous material, inflating said bladder against said fibrous material, injecting resin into said fibrous material and curing said fibrous material to form a solid reinforced structure.

Such a method known from US—A—3 937 781 uses an inflatable mandrel for forming internal surfaces of cylindrical tanks having domed ends. To maintain uniformity in the thickness of the fiber lay-up over the sidewall and end walls of the tank, a non-stretchable sleeve is used together with a rubber bag as inflatable bladder because a given inflation pressure produces interdependent forces on the sidewalls and end walls. Thus, the thickness of the end walls of the tank is controlled by adjusting the inflation pressure in a range sufficient to compress the fiber lay-up and to avoid migration of fibers.

Constant cross-section hollow structures may be produced by this method. However, many structures using hollow members require that they have varying cross-sectional geometry as well as part curvature, twists and joints. Such hollow members may, for example, involve automotive space frames, aircraft hulls and the like.

To date such hollow members or structures have typically been fabricated using a core material as the inner mold. A lightweight urethane foam is generally machined or cast to the correct geometry if the core is to be left inside the structure formed. The core may be dissolved or melted after the hollow structure is cured if the core is to be removed.

It is the object of the invention to improve the method of the generic kind by using an inflatable bladder as an inner mold where the dimensions of the bladder are not critical.

This object is solved with the method of the generic kind in that said bladder is inflated and expanded not beyond its unstressed perimeter by a source of relatively low pressure to hold said fibrous material against said inner walls when resin is injected to impregnate said fibrous material, and that said bladder includes a pair of pieces of flat elastomeric material which are seamed together after being cut to suitable shapes and sizes generally corresponding to the inside shape and size of said structure.

Preferably the said bladder is left in place after completion of the structure.

When highly complex molds are used, individual layers of fibrous material are placed in the outer mold in a way that they are free to slide.

According to the invention, the internal pressure is used to hold the fiber in place aginst the walls of the outer mold as resin is applied. Thus, the dimensions of the inflatable bladder are not critical.

Further advantages of the method of manufacturing a hollow fiber reinforced structure according to the invention will be apparent from the following specification taken in conjunction with the accompanying drawings.

Fig. 1 is an isomeric view of an irregular shaped structure of a type which may be made by practicing the present invention; and

Figs. 2—7 illustrate steps in a method for forming the structure illustrated in Fig. 1, in accordance with the present invention, with Fig. 7 being a cross-sectional view taken along lines 7—7 of Fig. 1.

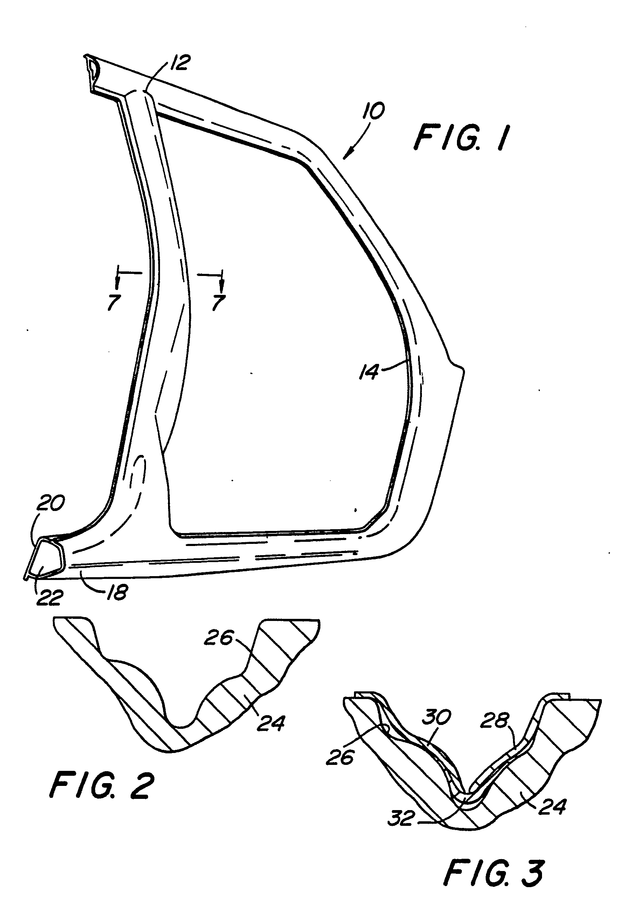

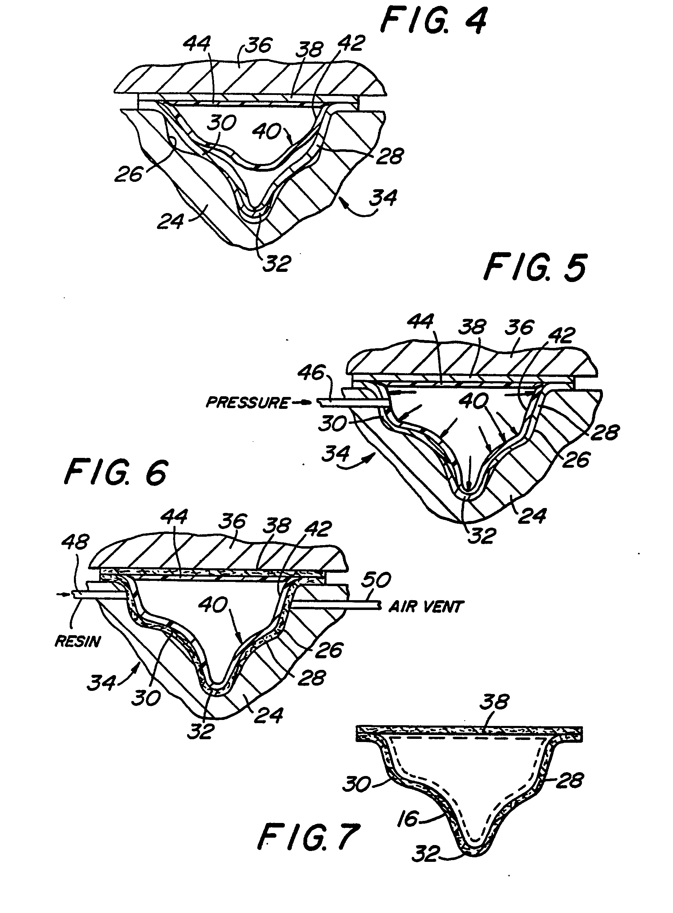

Referring to Fig. 1, a structure 10 illustrates part of a door frame for an automobile. The frame includes joints, such as a joint 12, curved surfaces, such as surface 14 and areas of irregular cross-sectional areas, as illustrated by section 16 (Fig. 7). The single integrally cured structure, 10, was developed from several prelocated, but unimpregnated, fibrous pieces of which 18 and 20 are but two, by subsequent, molding, resin injection and curing steps. A hollow area 22 extends through the structure 10.

Referring to Fig. 2, a rigid lower section 24 of an outer mold is illustrated. The lower section 24 is shaped to the structure or part being formed, for example, the structure 10 illustrated in Fig. 1.

Referring to Fig. 3, dry fibrous material, which may be glass reinforced, for example, is preplaced along the inner wall 26 of the lower mold section 24. In manually preplacing the fibrous material, more than one piece may be required when a cross-sectional area is exceptionally deep. In the embodiment illustrated, three fibrous pieces 28, 30 and 32 are used. It is understood, however, that sometimes only a single piece may be required or even the use of a pre-shaped piece, such as a preform, may be required.

Referring to Fig. 4, the complete rigid outer mold 34 comprises the bottom irregular shaped section 24 and an upper mold section 36. The outer mold 34, comprising upper and lower sections, is adapted to open and close the lower and upper sections 24 and 36 in a conventional manner.

Fibrous material 38 is also preplaced on the upper section 36. Prior to closing the mold 34, an inflatable bladder 40 may include a pair of pieces 42 and 44, which are seamed together after being cut to suitable shapes and sizes generally corresponding to the shape and size of the structure 10. The bladder 40 may be made of plastic or other suitable elastomeric material. The bladder 40 is illustrated partly inflated in Fig. 4, although in practice the pieces 42 and 44 may be flat against each other prior to inflation. While the upper section 36 is illustrated as being flat, it may also be of an irregular shape, such as the lower section 24, with the fibrous material being preplaced therein in the same manner as described with respect to the upper section. While the example shown in Fig. 4 demonstrates the ability to develop a flanged section, the process is equally capable of yielding unflanged, hollow sections.

Fig. 5 illustrates air or other suitable gas or medium, such as compressed microballoons, from a pressurized source being applied through a conduit 46 into the bladder 40 to cause it to inflate and force it against the fibrous material which was preplaced on the inner walls of the outer mold 34. The bladder 40 now serves as the inner mold for the next step in the operation.

Referring to Fig. 6, resin under pressure is forced through a conduit 48 to impregnate the fibrous material between the bladder 40 and the outer mold 34. An air vent 50 is provided from the fibrous material to atmosphere to assure that there are no voids in the fibrous material when the resin is injected under pressure to impregnate the fibrous material. The broad process of resin transfer molding (RTM) is known in the art.

Following the step of impregnating the fibrous material with resin, a curing operation which depends on the chosen resin catalyst, could either be room temperature or an elevated temperature which involves heating the fibrous material with the resin while under pressure. The curring completes forming of the structure 10. The outer mold 34 may be then opened and the structure removed. Depending on part complexity, bladder material, and resin the bladder may be readily removed or left in place as desired.

The process described may utilize a constant diameter thin wall plastic tube, the diameter of which matches the largest inside perimeter of the molded part. For sections of smaller perimeter dimensions, the excess bladder material, being so thin, does not interfere with the ability to form a smooth wrinkle-free inside molded surface. In fact, with the bladder material being very thin, no expansion of the bladder beyond its unstressed perimeter is desired due to possible rupture.

Carrying the proposed concept further, joints of a hollow frame are possible including complete frames, such as automotive space frames or aircraft structures. Also using the process, molded panels can be combined with hollow members during the same molding. When jointed structures are required, joining tubular plastic bladders are not desired. Instead two flat sheets of the chosen material will be cut and seamed to form the desired bladder. In this way, the disposable low cost bladder can be easily used to form a complete one piece structure including joints.

Important to this process is the reinforcement charge used to load the mold. For most hollow structures anticipated, the cross-sectional area is relatively small. Hence even though large pressures are available to inflate the plastic bladders, relatively small forces are developed. Such forces are in general not sufficient to force the fibrous material tight against all surfaces of a highly complex mold. Hence it is desirable to preform the fibrous material to the correct shape prior to inserting it into the mold. This can be accomplished as a simple preform using chopped fiber reinforcement and a binder.

If the production quantities are small, then the fibrous reinforcement can be cut to the correct size and approximately formed to the correct shape by hand prior to inserting the bladder. In order for the limited force exerted by the bladder to be able to force the reinforcement tight against all surfaces of a highly complex mold, the individual layers must be free to slide, so as not to become locked against a portion of the mold thereby preventing proper reinforcement location.

With many composite structures, hardware attachment is best accomplished by using metallic taping or rivet backup plates. This can be easily satisfied by prelocating metal plates betwen the reinforcement and the bladder or even between layers of the reinforcement.

If only the skeletal frame of a structure is to be molded, then the mold requirements are simplified. As noted before, the actual developed forces are relatively low. Also, the formed hollow sections are relatively small so no large unsupported expanses of mold are subjected to deforming pressures. As a consequence, the mold, while required to be accurate, need not be massive to withstand the bladder pressures. The complexity of the mold depends on several features such as size, geometry and shape, but in any event, it must be capable of being broken down sufficiently to remove the cured part.

## Claims

1. A method of forming a hollow fiber reinforced structure comprising the steps of:
 a) providing an outer mold (34);
 b) placing fibrous material (28, 30, 32, 38) along the inner walls (26) of said outer mold;
 c) placing an inner inflatable bladder (40) between said fibrous material;
 d) inflating said bladder (40) against said fibrous material;
 e) injecting resin into said fibrous material; and
 f) curing said fibrous material to form a solid reinforced structure (10), characterized in that
 —said bladder (40) is inflated and expanded not beyond its unstressed perimeter by a source of relatively low pressure to hold said fibrous material (28, 30, 32, 38) against said inner walls (26) when resin is injected to impregnate said fibrous material, and in that
 —said bladder (40) includes a pair of pieces (42, 44) of flat elastomeric material which are seamed together after being cut to suitable shaped and sizes generally corresponding to the inside shape and size of said structure (10).

2. The method according to claim 1, further characterized in that said bladder (40) is left in place after completion of the structure (10).

3. The method according to claim 1 or 2, further characterized in that individual layers of fibrous material (28, 30, 32, 38) are placed in the outer mold (34) in a way that they are free to slide.

## Patentansprüche

1. Verfahren zur Ausbildung eines hohlen faserverstärkten Bauteils, welches folgende Schritte aufweist:

a) Vorsehen einer äußeren Form (34);

b) Anordnen von Fasermaterial (28, 30, 32, 38) längs der Innenwände (26) der äußeren Form;

c) Positionieren einer inneren aufblasbaren Blase (40) zwischen dem Fasermaterial;

d) Aufblasen der Blase (40) gegen das Fasermaterial,

e) Einspitzen von Harz in das Fasermaterial und

f) Härten des Fasermaterials zur Bildung eines massiven verstärkten Bauteils (10), dadurch gekennzeichnet,

—daß die Blase (40) durch eine Quelle mit relative niedrigem Druck nicht über ihren ungedehnten Umfang hinaus aufgeblasen und ausgedehnt wird, um das Fasermaterial (28, 30, 32) gegen die Innenwände (26) zu halten, wenn das Harz eingespritzt wir, um das Fasermaterial zu imprägnieren, und

—daß die Blase (40) ein Paar von Teilen (42, 44) eines flachen elastomeren Materials aufweist, die nach Schneiden in geeignete Formen und Größen, die insgesamt der innenseitigen Form und Größe des Bauteils (10) entsprechen, zusammengefügt werden.

2. Verfahren nach Anspruch 1, welches weiterhin dadurch gekennzeichnet ist, daß die Blase (40) nach Vervollständigung des Bauteils (10) an Ort und Stelle belassen wird.

3. Verfahren nach Anspruch 1 oder 2, welches weiterhin dadurch gekennzeichnet ist, daß einzelne Schichten von Fasermaterial (28, 30, 32, 38) in der äußeren Form (34) so angeordnet werden, daß sie sich frei gleiten verschieben können.

## Revendications

1. Procédé de formage d'une structure creuse armée de fibres comportant les étapes consistant à:

a) disposer un moule extérieur (34);

b) placer le matériau fibreux (28, 30, 32, 38) le long des parois intérieures (26) dudit moule extérieur;

c) placer une chambre à air intérieure gonflable (40) entre ledit matériau fibreux;

d) gonfler ladite chambre à air (40) pour qu'elle vienne contre ledit matériau fibreux;

e) injecter de la résine dans ledit matériau fibreux; et

f) faire durcir ledit matériau fibreux pour former une structure monobloc armée (10), caractérisé en ce que

—on gonfle et on fait se dilater ladite chambre à air (40), sans aller au-delà de ce qui créerait des contraintes dans son périmètre, au moyen d'une source de pression relativement faible pour maintenir ledit matériau fibreux (28, 30, 32, 38) contre lesdites parois intérieures (26) lorsque l'on injecte de la résine pour imprégner ledit matériau fibreux; et en ce que

—ladite chambre à air (40) est constituée d'une paire d'éléments (42, 44) de matériau élastomère plat qui sont réunis ensemble après avoir été découpés à forme et à longueur convenables, correspondant de façon générale à la forme intérieure et à la dimension de ladite structure (10).

2. Procédé selon la revendication 1, caractérisé en ce que l'on ne laisse pas en place ladite chambre à air (40) après achèvement de la structure (10).

3. Procédé selon la revendication 1 ou 2, caractérisé en outre en ce que l'on place les différentes couches du matériau fibreux (28, 30, 32, 38) dans le moule extérieur (34) de façon à ce qu'elles puissent glisser.

FIG. 1

FIG. 2

FIG. 3

## FIG. 4